# EUROPEAN PATENT APPLICATION

(11) **EP 3 957 935 A1**
(43) Date of publication of application: **23.02.2022**
(21) Application number: 21177539.0
(22) Date of filing: 03.06.2021
(51) Int. Cl.: F25D 21/14, F25D 17/04, F16K 17/19

(54) **A VALVE ASSEMBLY AND A METHOD OF MANUFACTURE**

(30) Priority: 17.08.2020 GB 202012828
(71) Applicant: Illinois Tool Works, Inc., Glenview, Illinois 60025 (US)
(72) Inventor: SEEKINGS, Matthew, Glenview, Illinois, 60025 (US)
(74) Representative: HGF

(57) **Abstract**

A valve assembly (100) for a climatization container and a method of manufacturing a valve assembly. The valve assembly comprises a body portion (110), an air pressure relief valve (120) and a drain valve (130). The air pressure relief valve is configured to allow air into the body portion. The drain valve is configured to allow a liquid out of the body portion. The body portion is configured to fluidly couple to the interior of a climatization container.

## Description

### TECHNICAL FIELD

The present invention relates to a valve assembly for a climatization container and a method of manufacturing a valve assembly. In particular, but not exclusively, the present invention relates to a valve assembly for controlling the flow of air into and liquid out of a climatization container.

### BACKGROUND

A climatization container comprises a container suitable for keeping contents stored therein under particular climatic conditions, for instance within a predetermined temperature or humidity range. Climatization containers are commonly used for storing products such as food and beverages. Particular examples include refrigerators and freezers where the primary requirement is to store food and beverages within a predetermined temperature range. Where in the present document reference is made to a particular example of a climatization container, for instance a freezer, this should be understood to include all types of climatization containers unless the context requires that it is limited to the particular example.

The temperature within a climatization container commonly has a different temperature to the ambient temperature outside of the climatization container. The climatization container may therefore include a heat exchanger configured to reduce, or increase, or maintain the temperature within the climatization container. In climatization containers configured to be cooler than the ambient exterior temperature (refrigerators and freezers, for example) the heat exchanger is colder than the air in within the climatization container. Condensation such as water and or ice may build up on or around the heat exchanger. To remove the condensation build up and allow it to drain away the climatization container may run a defrost cycle, which warms the heat exchanger either by switching it off or by injecting heat into the heat exchanger. This causes any frozen condensation to liquify. This waste liquid must then be drained from the climatization container.

Further, when a climatization container is opened, (for example by opening a door) the ambient air enters the climatization container and when the climatization container is shut, the ambient air is rapidly cooled or heated. The rapid change in air temperature changes the air pressure within the climatization container, therefore resulting in a different pressure within the climatization container compared with the ambient air pressure on the exterior of the climatization container. In examples where the climatization container is configured to be cooler than ambient temperature, the air is rapidly cooled which results in a negative pressure within the climatization container in relation to the air pressure on the exterior of climatization container. Therefore it is often difficult to open the climatization container again. In large, commercial climatization containers the pressure difference can be sufficiently large to render it difficult or impossible to open the door.

It would be useful to provide an assembly capable of mitigating the above problems.

### BRIEF SUMMARY OF THE INVENTION

According to a first aspect of the present invention there is provided a valve assembly for a climatization container, the valve assembly comprising: a body portion; an air pressure relief valve configured to allow air into the body portion; and a drain valve configured to allow a liquid out of the body portion, wherein the body portion is configured to fluidly couple to the interior of a climatization container.

According to a second aspect of the present invention there is provided a climatization container comprising the valve assembly.

According to a third aspect of the present invention there is provided a method of manufacturing a valve assembly for a climatization container, the method comprising: providing a body portion; securing an air pressure relief valve to a first part of the body portion, the air pressure relief valve being configured to allow air into the body portion; and securing a drain valve to a second part of the body portion, the drain valve being configured to allow a liquid out of the body portion; wherein the body portion is configured to fluidly couple to the interior of a climatization container.

Certain embodiments of the invention provide the advantage that waste water may be expelled from a climatization container and the internal pressure of the climatization container can be controlled to be the same as or within a threshold pressure range of the ambient environment.

Furthermore, certain embodiments of the invention provide the advantage that the valve assembly is of reduced size relative to separately providing a pressure relief valve and a drain valve, as is conventional. This size reduction offers benefits including greater flexibility for locating the valve assembly, or more efficient design of a climatization container to maximise the interior volume of the climatization container for a given overall package size.

Certain embodiments of the invention provide the advantage that the thermal efficiency of a climatization container may be improved.

### BRIEF DESCRIPTION OF THE DRAWINGS

Embodiments of the invention are further described hereinafter with reference to the accompanying drawings, in which:
Fig. 1 illustrates an exploded view of a valve assembly according to an example of the present invention;
Fig. 2 illustrates a perspective view of the assembled valve assembly of Fig.1; and
Fig. 3 illustrates a side view of the valve assembly installed on a climatization container.

In the drawings like reference numerals refer to like parts.

### DETAILED DESCRIPTION

The present invention relates to a valve assembly for a climatization controller. The following description refers to refrigerators and freezers as examples of climatization containers according to the present invention. The invention is not limited only to refrigerators and freezers.

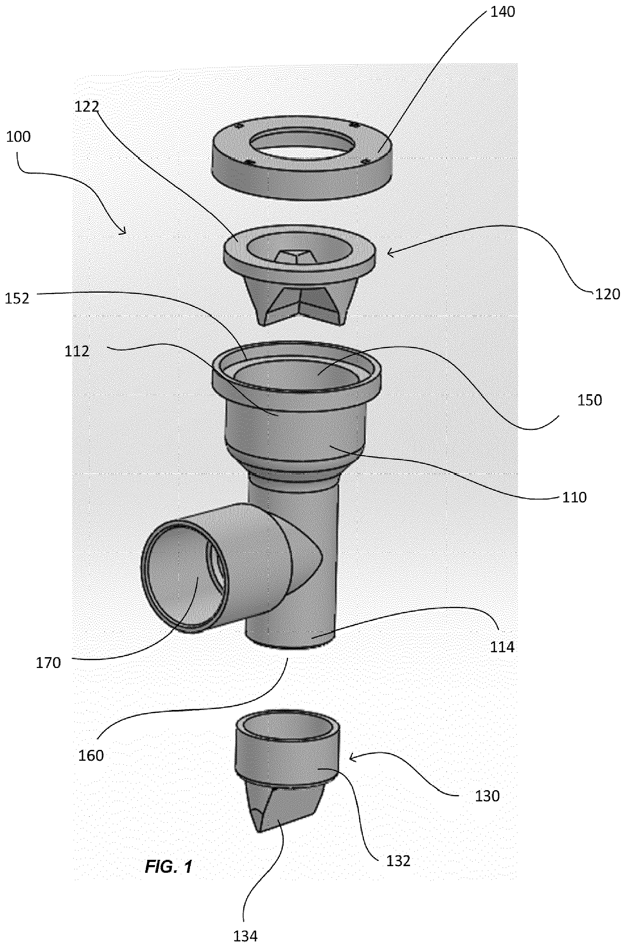

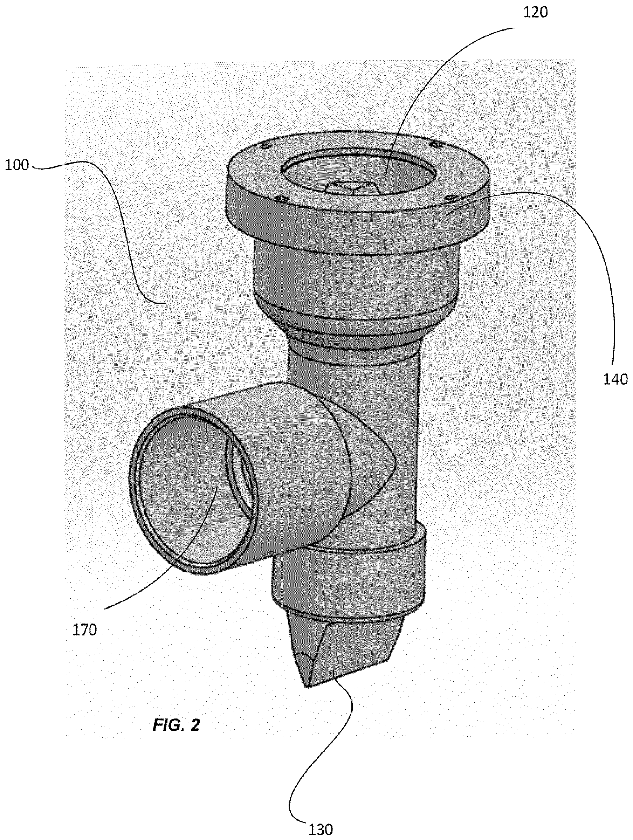

Referring to Fig. 1 and Fig. 2 a valve assembly 100 according to the present invention is shown. Fig. 1 shows the constituent parts of the valve assembly 100 in an exploded view and Fig. 2 shows the assembled valve assembly 100. The valve assembly 100 includes a body portion 110; an air pressure relief valve 120; and a drain valve 130. The valve assembly may also optionally include a retaining cap 140.

The body portion 110 may be a tubular body or conduit. The body portion 110 is configured to allow air and liquid to pass therethrough, such that in use, fluids may be drawn in or discharged from the climatization container. The body portion 110 of the valve assembly 100 is coupled to the air pressure relief valve 120 and the drain valve 130. In this example, the air pressure relief valve 120 and the drain valve 130 are spaced apart by the body portion 110. There is no restriction on the shape or form of the body portion 110 so long as it serves to fluidly connect the valves and the interior of a climatization container.

In this example the body portion includes a first connection portion 150. That is, a connection portion 150 configured to receive the air pressure relief valve 120. In this example the connection portion 150 includes a cavity which includes a lip 152 around the periphery. The lip 152 may protrude radially outward from an inner surface of the body portion 110. Correspondingly, the air pressure relief valve 120 may include a flange 122 which protrudes radially outwardly from the body of the air pressure relief valve 120. The flange 122 may therefore contact the lip 152 such that the air pressure relief valve 120 is retained in the first connection portion 150. In this example the retaining cap 140 can be affixed over the coupling of the air pressure relief valve 120 and first connection portion 150 (shown in Fig. 2) the retaining cap 140 may provide additional sealing to the valve assembly 100. The retaining cap 140 may be a press fit or a screw fit to retain the air pressure relief valve 120. Of course, in other examples the air pressure relief valve 120 may be coupled to the body portion 110 in an alternative manner for example with a sealant or adhesive material, or welding. In further examples the body portion 110 and one or more of valves 120, 130 may be integrally formed.

Further, the body portion 110 may include a second connection portion 160. The second connection portion 160 may be configured to couple to the drain valve 130. In this example the drain valve 130 includes a link portion 132 which is of a corresponding shape to the second connection portion 160 of the body portion 110. In this example, the link portion 132 has a diameter which is slightly wider than that of the connection portion 160. In this way the link portion 132 can receive the connection portion 160 with a tight engagement so that the coupling is air-tight. The drain valve 130 may therefore sealingly couple to the body portion 110. In some examples the connection portion 160 and the link portion 132 may be threaded or form an interference fit. In some alternative examples the connection portion 160 may be slightly wider than the link portion 132 such that the connection portion receives the link portion 132.

The air pressure relief valve 120 may be configured to allow air into the climatization container when the differential pressure between the inside and the outside of climatization container exceeds a predetermined threshold value, dependent on the configuration of the valve and the materials used. In this way, in use, the air pressure relief 120 valve is opened when the pressure inside the climatization container is lower than the ambient pressure outside the climatization container. That is, the air pressure relief valve 120 is opened automatically by negative pressure. The air pressure relief valve 120 may include a cross slit air inlet valve or a pressure reducing valve (PRV). The air pressure relief valve 120 may be a silicone or rubber material.

The drain valve 130 may include a liquid release portion 134, which is configured to release waste liquid from the climatization container. In this example the liquid release portion 134 includes a resilient slit (not shown) which releases under the weight of the retained liquid once the weight reaches a predetermined value dependent on the configuration of the valve and the materials used. In this example, the liquid capture portion 134 is a tapered shape (i.e. a duckbill shape) with the resilient slit positioned at the apex of the taper. In this way the weight of the liquid is concentrated along the resilient slit. In this example the drain valve 130 is airtight. This means that when the pressure in the body portion 110 of the valve assembly 100 is negative compared to the ambient pressure the drain valve 130 does not allow air in (and it is instead drawn in via the air pressure valve 120).

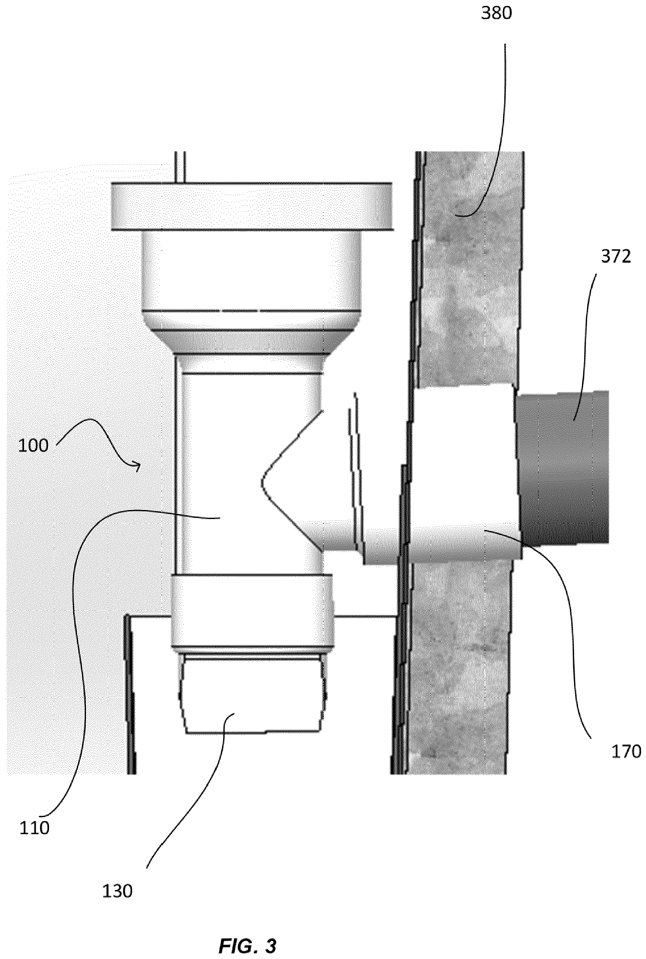

The body portion 110 may further include a third connection portion 170. As shown in Fig. 3 the third connection portion 170 allows the body portion 110 to couple to a pipe 372 which is arranged to traverse an exterior wall 380 of the climatization container (or as illustrated the third connection portion 170 may extend partially or fully through exterior wall 380). The pipe 372 is extends to the interior of the climatization container (not shown). This means that the valve assembly 100 provides a flow path between the exterior and interior of the climatization container. Alternatively, the third connection portion 170 may be elongated such that it can extend to the interior of the climatization container without the need for a separate pipe.

When in use the air pressure relief valve 120 may be coupled to the upper area 112 of the body portion 110, and the drain valve 130 may be coupled to the lower area 114 of the body portion 110. This allows the waste liquid to flow out of the body portion 110 and to the drain valve due to gravity 130 while the air flows into the body above the waste liquid. This may also provide a cooling effect to the incoming air due to heat transfer from the waste liquid leaving the climatization container. The valve assembly 100 therefore allows for the transfer of fluids (i.e. air in and liquid out) across the climatization container walls whilst preventing air leakage. Advantageously, because the valve assembly 100 is capable of both balancing the air pressure and draining the waste liquid a climatization container requires a single flow path across the wall instead of two (one for air and one for liquid). This therefore improves the thermal efficiency of the climatization container by reducing the number of apertures through insulation in the walls of the climatization container.

It will be clear to a person skilled in the art that features described in relation to any of the embodiments described above can be applicable interchangeably between the different embodiments. The embodiments described above are examples to illustrate various features of the invention.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

For the avoidance of doubt, the terms "may", "and/or", "e.g.", "for example" and any similar term as used herein should be interpreted as non-limiting such that any feature so-described need not be present. Indeed, any combination of optional features is expressly envisaged without departing from the scope of the invention, whether or not these are expressly claimed. The applicant reserves the right to change any originally filed claim or file any new claim accordingly, including the right to amend any originally filed claim to depend from and/or incorporate any feature of any other claim although not originally claimed in that manner.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A valve assembly for a climatization container, the valve assembly comprising:
a body portion;
an air pressure relief valve configured to allow air into the body portion; and
a drain valve configured to allow a liquid out of the body portion;
wherein the body portion is configured to fluidly couple to the interior of a climatization container.

2. A valve assembly as claimed claim 1, wherein the air pressure relief valve comprises a cross slit air inlet valve, such that the valve assembly is configured to allow air into the body portion when air pressure in the body portion drops below air pressure outside of the body portion a predetermined value.

3. A valve assembly as claimed in claim 1 or claim 2, wherein the drain valve comprises a resilient slit configured to release liquid when the weight of the liquid reaches a predetermined value.

4. A valve assembly as claimed in any preceding claim, wherein the body portion comprises a connection portion configured to couple to the connector.

5. A valve assembly as claimed in claim 4, wherein the drain valve is offset relative to the connection portion such that when coupled to a climatization container liquid can drain from the connection portion to the drain valve.

6. A valve assembly as claimed in claim 4 or claim 5, wherein the body portion is T-shaped, with the connection located between the air pressure relief valve and the drain valve.

7. A valve assembly as claimed in any preceding claim, wherein the air pressure relief valve is seated in a splayed end portion of the body portion and secured to the body portion via a retaining cap.

8. A valve assembly as claimed in any preceding claim, wherein the air pressure relief valve or the drain valve are secured to the body portion via a sealant, an adhesive, welding, an interference fit, corresponding screw threads or a retaining cap or collar.

9. A valve assembly as claimed in any preceding claim, wherein at least one of the air pressure relief valve and the drain valve are integrally formed with the body portion.

10. A climatization container comprising a valve assembly as claimed in any preceding claim.

11. A climatization container as claimed in claim 10, further comprising a pipe traversing an exterior wall of the climatization container to fluidly connect the interior of the climatization container and the body portion of the valve assembly.

12. A climatization container as claimed in claim 10, wherein the body portion comprises an elongated connection portion extending through an exterior wall of the climatization container to fluidly connect to the interior of the climatization container.

13. A method of manufacturing a valve assembly for a climatization container, the method comprising:
providing a body portion;
securing an air pressure relief valve to a first part of the body portion, the air pressure relief valve being configured to allow air into the body portion; and
securing a drain valve to a second part of the body portion, the drain valve being configured to allow a liquid out of the body portion;
wherein the body portion is configured to fluidly couple to the interior of a climatization container.
